# EUROPEAN PATENT APPLICATION

(11) **EP 3 675 005 A1**
(43) Date of publication of application: **01.07.2020**
(21) Application number: 19197730.5
(22) Date of filing: 17.09.2019
(51) Int. Cl.: G06Q 10/02

(54) **DISTRIBUTED PROCESSING SYSTEM AND INFORMATION PROCESSING METHOD**

(30) Priority: 27.12.2018 JP 2018244671
(71) Applicant: Hitachi, Ltd., Tokyo 100-8280 (JP)
(72) Inventor: KOBAYASHI, Yuichi, Tokyo, 100-8280 (JP); ARAKI, Riyousuke, Tokyo, 100-8280 (JP); AOKI, Chisako, Tokyo, 100-8280 (JP); NAKAYAMA, Mizuki, Tokyo, 100-8280 (JP); YOSHIJI, Kie, Tokyo, 100-8280 (JP)
(74) Representative: MERH-IP Matias Erny Reichl Hoffmann Patentanwälte PartG mbB

(57) **Abstract**

In a distributed processing system (10) including multiple information processing systems (11a, 11b), each of the plurality of information processing systems (11a, 11b) includes a storing device (201) that stores first information (400) associating second identification information of a medium of a user with first identification information for identifying the user, a specifying part (410) that specifies the first identification information based on the first information (400) and the second identification information acquired when information of the medium is read, and a processing part (300) that executes processing specific to the information processing system (11a, 11b) based on the first identification information specified by the specifying part (410) .

## Description

### BACKGROUND

### Technical Field

The present invention relates to a distributed processing system and an information processing method.

### Related Art

There is a technique for allowing a user of the Internet to collectively search and reserve products, services, and the like provided by different companies such as transportation facilities and accommodation facilities, for example, via a predetermined Web page. To implement such a technique, in general, a connection server that performs information matching, data format conversion, and so on is provided between a server that manages a predetermined Web page and multiple systems of the different companies (for example, see Japanese Patent Application Publication No. 2004-192357).

However, in order to allow the user to collectively perform reservation and the like of the services of the different companies, the connection server needs to retain personal information for authentication and information held in the plurality of systems (for example, ticket information of the transportation facilities and reservation information of the accommodation facilities).

Since the connection server is provided between the server that manages the predetermined Web page and the multiple systems of the different companies, the user cannot access any of the multiple systems if a failure occurs in the connection server.

Therefore, when the connection server is used, it is not only necessary to strictly manage personal information leakage and various kinds of information but also necessary to surely maintain a relay service. Therefore, in general, management cost of the system increases.

### SUMMARY OF THE INVENTION

The present invention has been devised in view of the conventional problems described above, and an object of the present invention is to provide a technique that can reduce management cost of a system.

In a distributed processing system including a plurality of information processing systems of the present invention for solving the problems described above, each of the plurality of information processing systems includes: a storing device that stores first information associating second identification information of a medium of a user with first identification information for identifying the user; a specifying part that specifies the first identification information based on the first information and the second identification information acquired when information of the medium is read; and/or a processing part that executes processing specific to the information processing system based on the first identification information specified by the specifying part.

In an information processing method of the present invention, each of a plurality of information processing systems of a distributed processing system including the plurality of information processing systems specifies first identification information for identifying a user based on first information common to the plurality of information processing systems, the first information associating second identification information of a medium of the user with the first identification information, and based on the second identification information acquired when information of the medium is read, and/or executes processing specific to the information processing system based on the specified first identification information.

According to the present invention, it is possible to provide a distributed processing system that can reduce management cost of systems.

### BRIEF DESCRIPTION OF THE DRAWINGS

Fig. 1 is a diagram showing the configuration of a distributed processing system;
Fig. 2 is a diagram showing an example of the configuration of an image processing apparatus;
Fig. 3 is a diagram showing an example of functional blocks and the like realized in the information processing apparatus;
Fig. 4 is a diagram showing a relation between a member ID and right information;
Fig. 5 is a diagram showing a relation between a single ID and a medium ID;
Fig. 6 is a diagram showing a relation between the member ID and the single ID;
Fig. 7 is a diagram showing a relation between a terminal ID and a system ID;
Fig. 8 is a diagram showing an example of a setting screen;
Fig. 9 is a diagram showing an example of a common service setting screen;
Fig. 10 is a diagram showing an example of processing executed in an information processing system; and
Fig. 11 is a diagram showing an example of processing executed in the distributed processing system.

### DETAILED DESCRIPTION OF THE INVENTION

At least the following matters are clarified by the description of this specification and the accompanying drawings.

### Embodiment

### Overall configuration of a distributed processing system

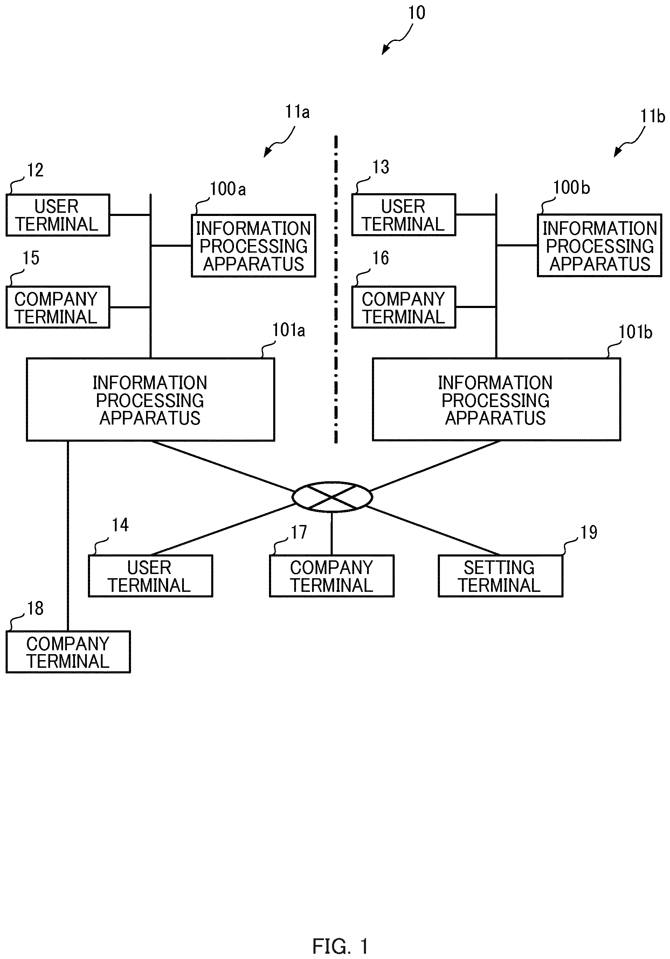

Fig. 1 is a diagram showing a configuration example of a distributed processing system 10 in an embodiment. The distributed processing system 10 is a system in which a user collectively accesses systems of multiple different companies and causes multiple systems to execute system-specific processing. Specifically, the distributed processing system 10 executes processing concerning a service or the like purchased by the user using identification information unique to the user specified by identification information of an electronic medium or the like owned by the user. Note that, in the following explanation, identification information of an electronic medium (for example, an IC card or a magnetic card), a paper ticket, or the like is referred to as "medium ID" and identification information unique to a user is referred to as "single ID".

The distributed processing system 10 includes information processing systems 11a and 11b, user terminals 12 to 14, company terminals 15 to 18, and a setting terminal 19.

The information processing system 11a is, for example, a system operated and managed by a company that operates a transportation facility such as a railroad (hereinafter referred to as "railroad company A"). The information processing system 11a includes an information processing apparatus 100a and an information processing apparatus 101a.

The information processing apparatus 100a is a server managed and operated by the railroad company A in order to perform reservation of railroad tickets, management of entrance into and exit from a station, and the like. The information processing apparatus 100a executes processing concerning, for example, a railroad ticket purchased by the user. Note that, as explained in detail below, the information processing apparatus 100a stores the railroad ticket or the like purchased by the user in association with identification information of the user (hereinafter referred to as "member ID" of the user) in the railroad company A.

The information processing apparatus 101a is an apparatus used when the single ID and the member ID in the railroad company A of the user are specified based on the medium ID of the user. Note that details concerning the information processing apparatus 101a are explained below.

The information processing system 11b is, for example, a system operated and managed by a company that operates a ticket sales site (hereinafter referred to as "ticket sales company B"). The information processing system 11b includes an information processing apparatus 100b and an information processing apparatus 101b.

The information processing apparatus 100b is, for example, a server managed and operated by the ticket sales company B in order to perform reservation and the like of tickets of events (for example, a concert and a play) . The information processing apparatus 100b executes processing concerning a ticket or the like purchased by the user. Note that, as explained in detail below, the information processing apparatus 100b stores the ticket or the like purchased by the user in association with a member ID of the user in the ticket sales company B.

The information processing apparatus 101b is an apparatus used when the single ID and the member ID in the ticket sales company B of the user are specified based on the medium ID of the user. Note that details concerning the information processing apparatus 101b are explained below.

The user terminal 12 is, for example, an electronic device such as a portable device, a tablet, or a personal computer owned by the user. Note that the user terminals 13 and 14 are the same as the user terminal 12.

The company terminal 15 is, for example, a terminal, for example, managed by the railroad company A and is, for example, an apparatus capable of reading information of an electronic medium or a paper medium such as a ticket owned by the user. Specifically, the company terminal 15 is, for example, a terminal such as an automatic gate that automatically determines a state of the ticket of the user using a terminal or dedicated hardware handled by an attendant of the railroad company A. Therefore, the company terminal 15 is a terminal that determines the state of the ticket owned by the user by reading a ticket medium or the like indicating a reservation state into the terminal. The company terminal 15 can read the information in a medium such as an IC ticket or a magnetic ticket and can confirm whether the information can be used. Note that the company terminal 15 is a so-called conventional terminal exclusive for the railroad company A that performs exchange of information of a ticket of the user directly with the information processing apparatus 100a.

The company terminal 16 is, for example, a terminal, for example, managed by the ticket sales company B and is, for example, an apparatus capable of reading information of an electronic medium or a paper medium such as a ticket owned by the user. The company terminal 16 is also, for example, a terminal that is provided in an entrance or the like of a concert or event hall and determines a state of a ticket owned by the user. Note that the company terminal 16 is a so-called conventional terminal exclusive for the ticket sales company B that performs exchange of information of a ticket of the user directly with the information processing apparatus 100b.

The company terminal 17 is a terminal that is coupled to multiple information processing systems 11a and 11b and, for example, acquires ticket information of the user. Note that main functions of the company terminal 17 are the same as the main functions of the company terminals 15 and 16. However, the company terminal 17 is coupled to the information processing systems 11a and 11b via the Internet.

The company terminal 18 is a terminal coupled to the information processing apparatus 101a and managed and operated by the railroad company A. Note that, as explained in detail below, the company terminal 18 acquires ticket information or the like of the user via the information processing apparatus 101a.

The setting terminal 19 is, for example, a terminal used to set operation, processing, and the like of the distributed processing system 10.

### Configurations of the terminals and the information processing apparatuses

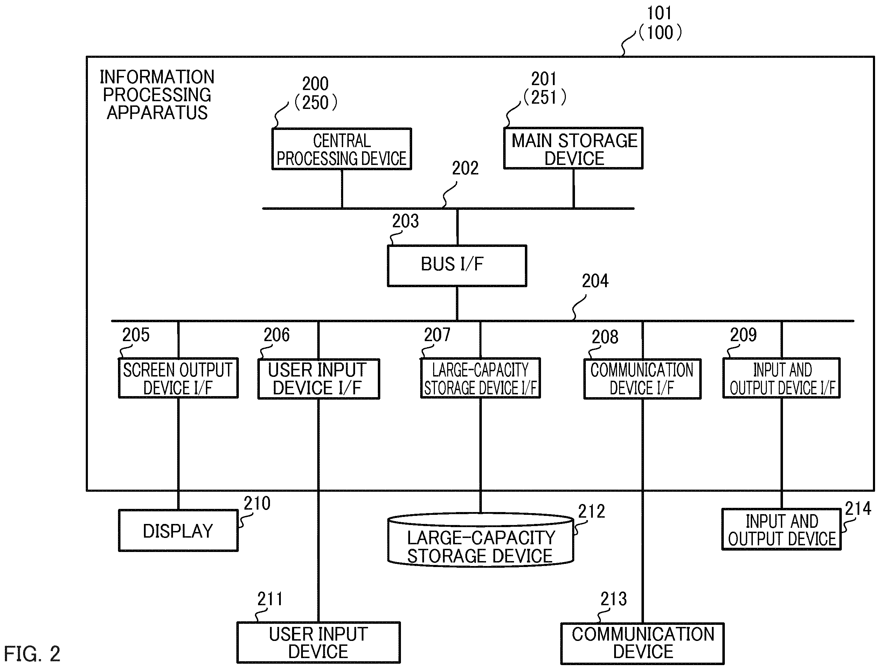

Fig. 2 is a diagram showing an example of hardware configurations of the terminals such as the user terminal 12 and the information processing apparatuses 100 and 101 explained above. Note that, for convenience, the information processing apparatus 101 is explained as an example below. However, the user terminals 12 to 14, the company terminals 15 to 17, the setting terminal 19, and the information processing apparatus 100 are the same as the information processing apparatus 101.

The information processing apparatus 101 includes a central processing device 200, a main storage device 201, an internal bus 202, a bus I/F (interface) 203, an external bus 204, a screen output device I/F 205, a user input device I/F 206, a large-capacity storage device I/F 207, a communication device I/F 208, and an input and output device I/F 209. Further, the information processing apparatus 101 includes a display 210, a user input device 211, a large-capacity storage device 212, a communication device 213, and an input and output device 214.

The central processing device 200 is a device for performing an arithmetic operation such as execution of programs stored in the main storage device 201. The central processing device 200 realizes various functions in the information processing apparatus 101.

The main storage device 201 is, for example, a storage device such as a hard disk and is used as a processing region during program execution and a temporary storage region of data. The main storage device 201 stores, for example, a basic program such as an OS (Operating system) and information such as an ID concerning the user.

Note that the central processing device 200 and the main storage device 201 are coupled by the internal bus 202. The internal bus 202 is coupled to the external bus 204 via the bus I/F 203.

The external bus 204 is coupled to the screen output device I/F 205, the user input device I/F 206, the large-capacity storage device I/F 207, the communication device I/F 208, and the input and output device I/F 209. The external bus 204 mediates data input and output between the I/Fs such as the screen output device I/F 205 and the central processing device 200 and the main storage device 201 using the bus I/F 203 and the internal bus 202.

The screen output device I/F 205 is an I/F for connection to the display 210. The screen output device I/F 205 outputs information obtained through the external bus 204 to the display 210.

The display 210 is a device capable of displaying an operation setting screen (explained below) for setting the operation of the systems, a processing state, and the like. The display 210 can display, for example, information for operating the basic program.

The user input device I/F 206 is an I/F for connection to the user input device 211 and outputs information input from the user input device 211 to the external bus 204.

The user input device 211 is a device for receiving an input from the user such as a keyboard and a mouse. Information input from the user input device 211 is output to the user input device I/F 206.

The large-capacity storage device I/F 207 is an I/F for connection to the large-capacity storage device 212. The large-capacity storage device I/F 207 mediates data input and output between the large-capacity storage device 212 and the external bus 204.

The large-capacity storage device 212 is a device such as a hard disk drive (HDD). The large-capacity storage device 212 stores a basic program for realizing various functions of the information processing apparatus 101, a processing result during program execution, and various kinds of information such as identification information (a single ID and a member ID) of the user and a medium ID. Note that details of the various kinds of information stored in the large-capacity storage device 212 are explained below.

Note that, in this embodiment, when various kinds of processing are executed, the central processing device 200 reads out the programs and the data to the main storage device 201 and executes the programs.

The communication device I/F 208 is an I/F for connection to the communication device 213. The communication device I/F 208 mediates data input and output between the communication device 213 and the external bus 204.

The communication device 213 is a device for connection to an external server apparatus via, for example, an Ethernet (registered trademark). The communication device 213 performs communication with an external device and the like.

The input and output device I/F 209 is an I/F for connection to the input and output device 214. The input and output device I/F 209 mediates data input and output between the input and output device 214 and the external bus 204. The input and output device 214 is a drive device capable of reading data from and writing data in an external medium, a finger vein reading device for performing user authentication, or the like.

The configuration of the information processing apparatus 101 (the information processing apparatuses 101a and 101b) is explained above. However, the other information processing apparatuses 100a and 100b, the user terminals 12 to 14, the company terminals 15 to 17, the setting terminal 19, and the information processing apparatus 100 have the same configuration.

### Information processing apparatus 100a

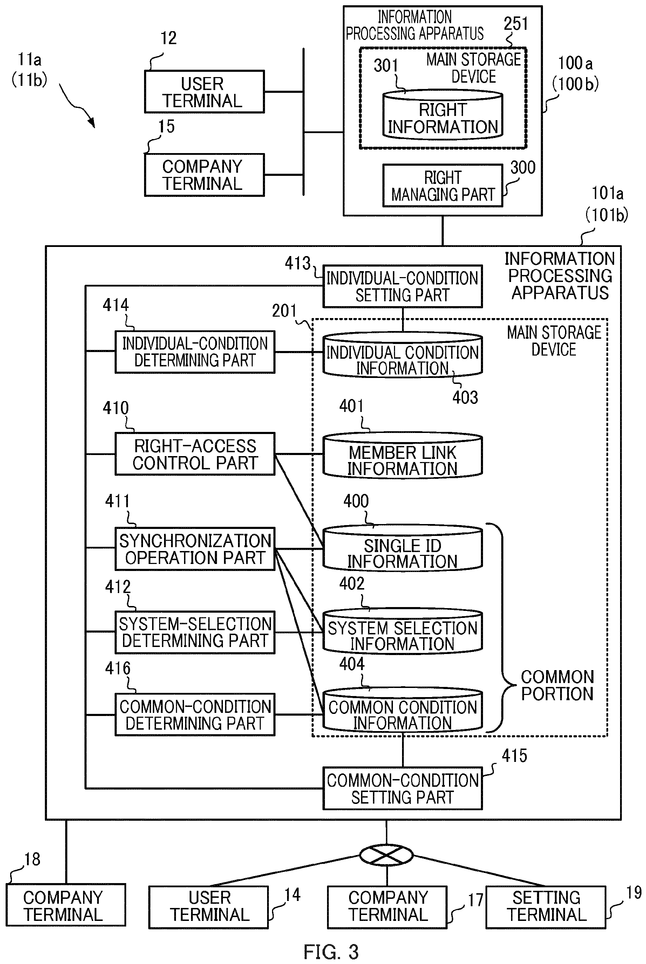

Fig. 3 is a diagram showing functional blocks realized in the information processing apparatuses 100a and 101a and information stored in the information processing apparatuses 100a and 101a. Note that, for convenience, the information processing devices 100a and 101a are explained below. However, the information processing apparatuses 100b and 101b are the same as the information processing apparatuses 100a and 101a.

A central processing device 250 shown in Fig. 2 of the information processing apparatus 100a executes a predetermined program, whereby the information processing apparatus 100a realizes a right managing part 300.

The right managing part 300 is a functional block that manages right information 301 (explained below). The right managing part 300 performs processing such as reference to and rewriting of the right information 301.

The right information 301 (service information) is information concerning a ticket (a right) purchased by the user. The right information 301 is stored in a main storage device 251 (a storing device) shown in Fig. 2 of the information processing apparatus 100a.

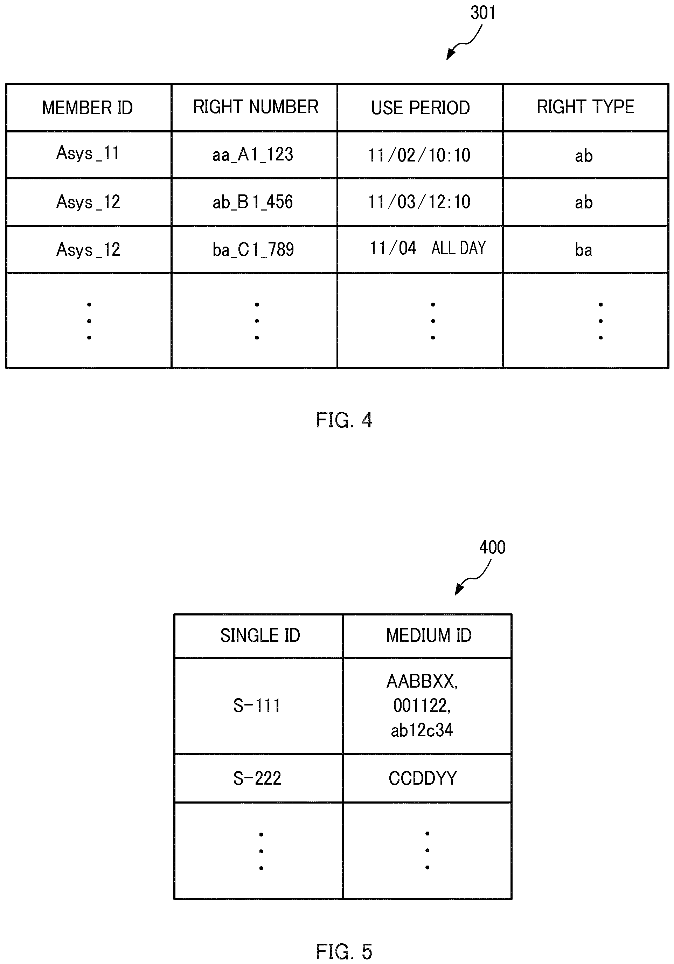

Fig. 4 is a diagram showing an example of the right information 301. The right information 301 includes, for each "member ID" of a user of the railroad company A, for example, a "right number" indicating a reservation number of a ticket purchased by the user, a "use period" of the ticket purchased by the user, and a "right type" indicating an effective range (for example, a section between "Tokyo" and "Yokohama") of the ticket purchased by the user.

Note that, Fig. 4 shows that, for example, a user specified by a member ID "Asys-11" has reserved a ticket for a section from "a" station to a "b" station "departing 10:10 on November 2" as a right number "aaA1_123". Therefore, respective kinds of information included in the right information 301 are equivalent to information (service information) indicating contents of the ticket (a service to be provided to the user).

### Information processing apparatus 101a

Next, information stored in the information processing apparatus 101a and functional blocks realized in the information processing apparatus 101a are explained.

### Information of the main storage device 201

Single ID information 400, member link information 401, system selection information 402, individual condition information 403, and common condition information 404 are stored in the main storage device 201 (the storing device) of the information processing apparatus 101a.

The single ID information 400 (first information) is, as shown in Fig. 5, information for linking multiple medium IDs (second identification information) of a user with one common ID called a single ID (first identification information). For example, in Fig. 5, a user to whom a single ID "S-222" is allocated owns a medium to which a medium ID "CCDDYY" is allocated. Note that a user to whom a single ID "S-111" is allocated owns three kinds of different media.

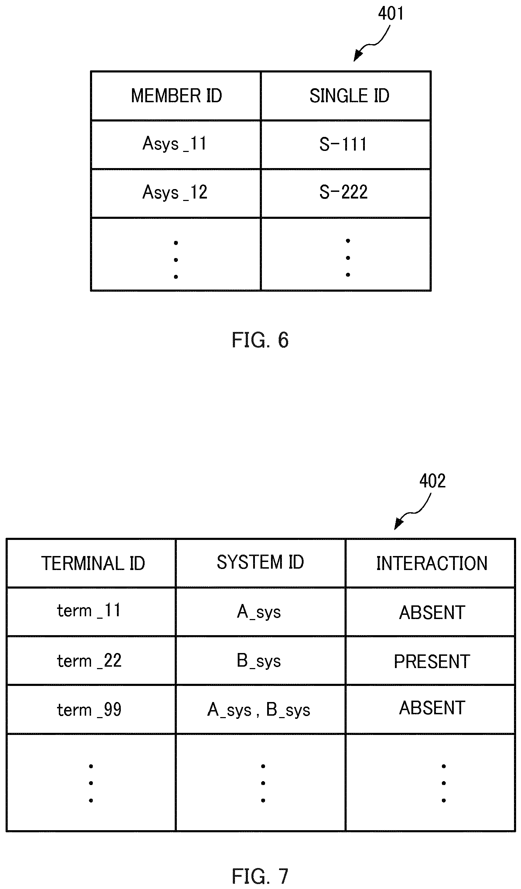

The member link information 401 (second information) is, as shown in Fig. 6, information for linking the single ID with a member ID (third identification information) allocated to a member (a customer who uses a service).

The system selection information 402 (third information) is, as shown in Fig. 7, information for deciding, when a user uses a terminal (for example, the company terminal 17 shown in Fig. 1) coupled to the multiple information processing systems 11a and 11b, which system a terminal should inquire about ticket information (right information) of the user.

For example, when a terminal ID of the company terminal 17 is "term_99" shown in Fig. 7, transmission destinations of information read by the company terminal 17 are two systems (an A system (the information processing system 11a) and a B system (the information processing system 11b)) specified by system IDs. The system selection information 402 also includes information concerning presence or absence of interaction with terminals. Note that a terminal "interaction present" is, for example, a terminal capable of interacting with a user such as a counter terminal or a cellular phone of a company. On the other hand, a terminal "interaction absent" is, for example, a terminal incapable of interacting with a user such as a ticket gate or an entrance gate.

The individual condition information 403 (first setting information) is information concerning use (for example, a usable place and usable time) of a right such as a ticket of a user. As explained in detail below, the individual condition information 403 is set by an individual-condition setting part 413.

The common condition information 404 (second setting information) is information for, when a user purchases tickets of multiple companies, specifying new services and so on to be provided to the user based on contents of the tickets and so on. For example, when the user purchases both of a predetermined railroad ticket and a predetermined event ticket, an example of the information concerning a new service is information indicating an instruction or the like to provide a drink or the like to the user. Note that the common condition information 404 is set by a common-condition setting part 415 explained below.

Among the information stored in the main storage device 201, three kinds of information of the single ID information 400, the system selection information 402, and the common condition information 404 are information common in all the information processing systems 11a and 11b included in the distributed processing system 10. These three kinds of information are updated in synchronization in all the information processing systems 11a and 11b by a synchronization operation part 411 explained below. Therefore, use of the single ID of the user updated as appropriate and the member link information 401 including the relation between the single ID and the member ID enables all the information processing systems 11a and 11b to specify the respective system-specific members ID from the single ID.

### Functional blocks

The information processing apparatus 101a executes predetermined programs of the main storage device 201 to thereby realize a right-access control part 410, a synchronization operation part 411, a system-selection determining part 412, an individual-condition setting part 413, an individual-condition determining part 414, a common-condition setting part 415, and a common-condition determining part 416.

For example, the right-access control part 410 (a specifying part or a transmitting part) executes processing such as acquisition of various kinds of information of the main storage device 201 and performs integrated control of various functional blocks of the information processing apparatus 101a. The right-access control part 410 exchanges information with the information processing apparatuses 100a and 101b.

When the three kinds of information (the single ID information 400, the system selection information 402, and the common condition information 404) shared by the information systems included in the distributed processing system 10 are changed, the synchronization operation part 411 performs synchronization processing in other information systems. Specifically, for example, when the single ID information 400 of the information processing system 11b is updated, for example, the synchronization operation part 411 of the information processing system 11a updates the single ID information 400 of the information processing system 11a in the same manner. Therefore, the three kinds of information (the single ID information 400, the system selection information 402, and the common condition information 404) are shared in the multiple information processing systems of the distributed processing system 10.

The system-selection determining part 412 executes control of an access according to the system selection information 402.

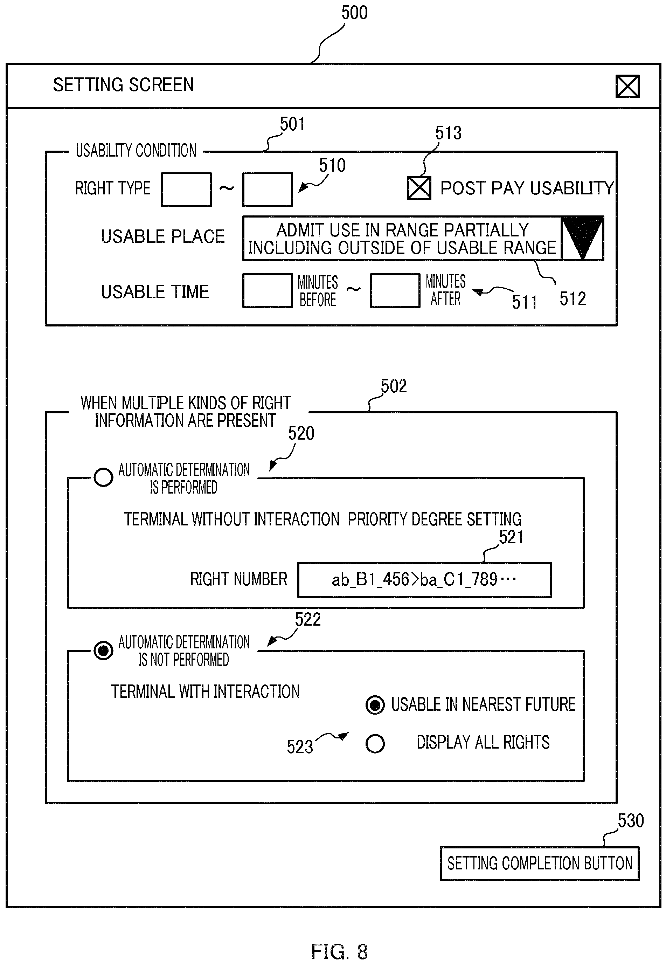

The individual-condition setting part 413 (a first setting part) sets, based on the individual condition information 403, a condition for deciding whether a service to be provided to a user is usable. Fig. 8 is a diagram showing an example of a setting screen 500 in setting the individual condition information 403 (first setting information).

The individual-condition setting part 413 decides, for example, when a certain user uses a right such as a ticket, information (a period, a place, possibility of post pay, and the like) concerning whether the ticket of the user is usable.

The setting screen 500 includes a setting region 501 and a setting region 502. The setting region 501 is a region including indication "usability condition" and for deciding a condition for deciding possibility of use of a right of a user. The setting region 501 includes regions 510 to 512 and a button 513.

The region 510 is a region for deciding to what kind of "right type" of the right information 301 the usability condition is applied. For example, when the "right type" of the right information 301 explained above is a section such as "Tokyo" to "Yokohama", which is an effective range of a ticket purchased by the user, it is possible to, for example, designate only, for example, a part of the section of the effective range and designate a section outside the effective range.

For example, usable time of the ticket owned by the user can be input to the region 511. Specifically, the region 511 is a region for deciding a usable range with respect to the use period decided by the right information 301 of the ticket of the user. For example, information such as usability only within a range of the right information 301 and usability even in a range partially including the outside of the usable range such as minutes before or after the usable range can be input to the region 511.

The region 512 is a region for deciding to which range use is permitted in the use place decided by the right information 301 of the ticket. For example, information such as usability only within a range of the right information and usability even in a range partially including the outside of the usable range can be set in the region 512.

The button 513 is a button for setting, for example, when the user uses the outside of the set range of the right information 301, whether it is possible to receive a charge after the use.

The setting region 502 is a region for setting the operation or the like of a company terminal when the user has multiple tickets or when multiple kinds of right information 301 are associated with a member ID of the user. The setting region 502 includes indication "when multiple kinds of right information are present". Regions 520 and 521 are provided in the setting region 502.

The region 520 is a region including indication "automatic determination is performed" and selected when the multiple right information 301 of the user are automatically, for example, displayed or processed. Note that the region 520 is selected when a company terminal, from which a medium of the user is read, is, for example, a terminal without interaction such as an entrance gate.

The region 521 is a region for specifying that selection concerning which right (service) is used among the multiple kinds of right information 301 is automatically decided. The region 521 enables use under priority conditions decided by the company or use under priority conditions decided by the user himself or herself. Note that, when it is not decided which right is used when the user causes the company terminal to read the medium, from reading time when the medium is read and the use period included in the right information 301, the user may be caused to select a right close to the reading time. Note that information input to the region 521 is second setting information for setting respective priority degrees of information indicating multiple services.

The region 522 is a region including indication "automatic determination is not performed" and selected when the multiple kinds of right information 301 of the user are processable by a terminal with interaction such as a counter terminal of the company. The selection button 523 can select whether to preferentially display a right that can be used in nearest future or display all owned rights, for example, based on date and time information or the like among the multiple kinds of right information 301 of the user.

When a setting completion button 530 is pressed after performing the setting of the various kinds of information on the setting screen 500, the setting contents are recorded in the main storage device 201 as the individual condition information 403.

The individual-condition determining part 414 shown in Fig. 3 determines whether a ticket (a right) owned by the user is usable based on various kinds of information (for example, time when a medium of a user is read and a terminal ID of a company terminal read by the medium of the user) transmitted from the company terminal and the right information 301 and the individual condition information 403.

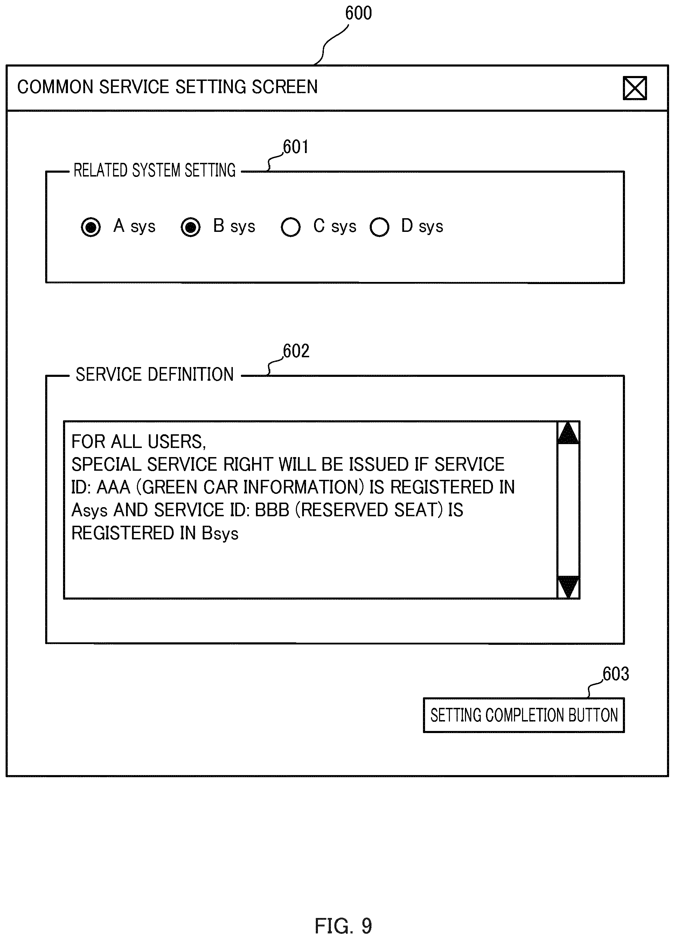

The common-condition setting part 415 (a second setting part) is a functional block for setting the common condition information 404 indicating conditions for realizing a cooperated service among multiple companies. Fig. 9 is a diagram showing an example of a setting screen 600 in setting the common condition information 404. The setting screen 600 includes a region 601 and a region 602.

The region 601 is a region including indication "related system setting" and for deciding a related system in order to realize the cooperated service. Specifically, for example, when a distributed processing system includes four systems (systems A to D), a system related to the associated service is selected.

The region 602 includes indication "service definition". Specific details of a new service are specified. For example, the service definition specified in the region 602 is what will be provided to a certain user when the user retains specific right information in the systems, and also includes description of conditions for service IDs in the systems.

Specifically, for example, among services of the railroad company A, provision of a new service such as a drink to a user who uses a green car in a predetermined section and reserves a predetermined seat in an event of the ticket company B is explained as an example. In this case, a service ID: AAA concerning the green car in a ticket (a right) of the railroad company A and a service ID: BBB concerning a predetermined reserved seat in a ticket (a right) of the ticket company B are input to the region 602, whereby a special service is provided to the user who satisfies such both conditions.

By performing such service definition, it is easy to develop a service by collectively using a railroad and a bus in a specific pattern.

Note that, in Fig. 9, a definition "for all the users, a special service right will be issued if a service ID: AAA is registered in an Asys (the system A) and a service ID: AAA is registered in a Bsys (the system B)" is input.

When the setting completion button 603 is pressed after performing setting of various kinds of information on the setting screen 600, the setting contents are recorded in the main storage device 201 as the common condition information 404.

The common-condition determining part 416 shown in Fig. 3 performs determination processing for determining, for example, whether to issue a special service right based on information concerning a ticket (a right) of a user and the common condition information 404.

### An example of processing executed in the information processing system 11a

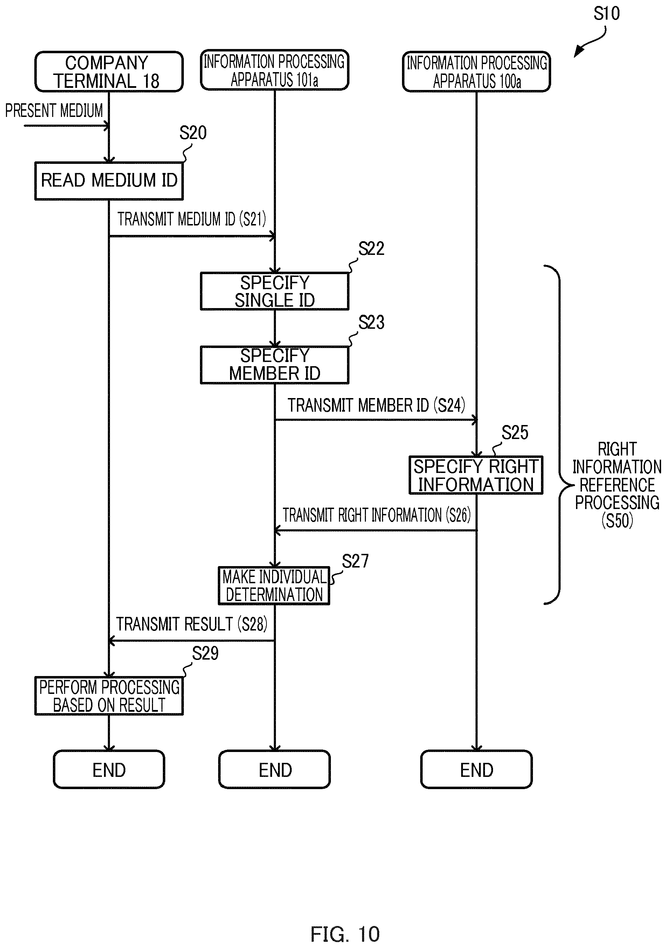

Fig. 10 is flowchart showing an example of processing S10 executed in the information processing system 11a. For example, operation performed when a user X who purchases a ticket of the railroad company A causes the company terminal 18 (for example, an entrance gate) of the railroad company A to read a medium is explained.

First, the user X presents an electronic medium and causes the company terminal 18 to read the electronic medium. Then, the company terminal 18 reads a medium ID of the electronic medium (S20).

The company terminal 18 transmits the medium ID to the information processing apparatus 101 managed by the railroad company A (S21).

The right-access control part 410 (the specifying part) of the information processing apparatus 101a specifies a single ID of the user X based on the transmitted medium ID and the single ID information 400 (S22).

Further, the right-access control part 410 specifies a member ID of the user X in the railroad company A based on the single ID specified in the processing S22 and the member link information 401 (S23).

When the member ID of the user X is specified, for example, the right-access control part 410 transmits the member ID to the information processing apparatus 100a (S24).

The right managing part 300 (a processing part) of the information processing apparatus 100a specifies right information of the user X based on the transmitted member ID and the right information 301 (S25). The right managing part 300 transmits the right information specified in the processing S25 to the information processing apparatus 101a (S26).

The individual-condition determining part 414 of the information processing apparatus 101a executes determination processing (individual determination) for the ticket (a right) of the user X based on the right information transmitted in the processing S26 and the individual condition information 403 (S27). Specifically, the individual-condition determining part 414 determines whether the ticket of the user X is usable based on a content of the ticket (the right) of the user X and the individual condition information 403.

For example, the right-access control part 410 transmits a determination result to the company terminal 18 (S28). For example, the company terminal 18, which is the entrance gate, executes processing based on the determination result (S29). For example, the company terminal 18 opens the gate based on a determination result that the ticket of the user X is usable. On the other hand, when a determination result that the ticket of the user X is unusable is transmitted, the company terminal 18 closes the gate.

Note that, in the following explanation, in this embodiment, processing in the processing S22 to S27 executed in the information processing apparatuses 100a and 101a is referred to as "right information reference processing S50".

### An example of processing executed in the multiple information processing systems

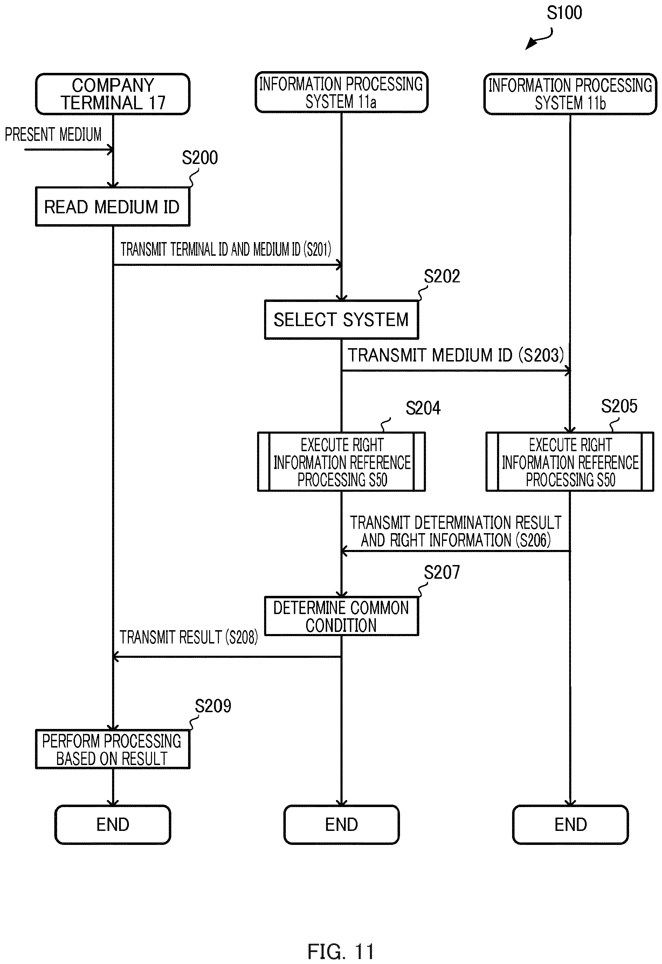

Fig. 11 is a flowchart showing an example of processing S100 executed in the multiple information processing systems 11a and 11b. For example, operation performed when a user Y who purchases a ticket of the railroad company A and a ticket of the ticket sales company B causes the company terminal 17 (for example, a counter terminal) to read a medium is explained.

First, the user Y presents an electronic medium and causes the company terminal 17 to read the electronic medium. Then, the company terminal 17 reads a medium ID of the electronic medium (S200).

The company terminal 17 transmits the read medium ID and a terminal ID allocated to the company terminal 17 to the information processing apparatus 101a managed by the railroad company A (S201).

The system-selection determining part 412 of the information processing apparatus 101a selects an information system to which to transmit (transfer) the medium ID (S202) based on the transmitted terminal ID and the system selection information 402. It is assumed to decide, as the system selection information 402, whether the company terminal 17 (a reading terminal) should inquire the information processing systems 11a and 11b about ticket information (right information) of the user. Therefore, for example, the right-access control part 410 of the information processing apparatus 101a transmits the medium ID to the information processing system 11b (S203).

When receiving the medium ID transmitted in the processing S201, the information processing system 11a executes the right information reference processing S50 (S204). The right information reference processing S50 is the processing in S22 to S27 explained with reference to Fig. 10. Therefore, when the processing S204 (the right information reference processing S50) is executed, right information of the ticket of the railroad company A purchased by the user Y and a determination result concerning whether the ticket is usable are obtained.

When receiving the medium ID transmitted in the processing S203, the information processing system 11b executes the right information reference processing S50 (S205). Therefore, when the processing S205 (the right information reference processing S50) is executed, right information of the ticket of the ticket sales company B purchased by the user Y and a determination result concerning whether the ticket is usable are obtained.

The information processing apparatus 101b of the information processing system 11b transmits the determination result acquired in the processing S205 and the right information to the information processing system 11a (S206).

The common-condition determining part 416 of the information processing apparatus 101a determines whether to issue a special service right (S207) based on the right information of the ticket of the railroad company A obtained in the processing S204, the right information of the ticket of the ticket sales company B transmitted in step S206, and the common condition information 404.

For example, the right-access control part 410 of the information processing apparatus 101a transmits a result of individual determination of the two tickets and a result of common condition determination to the company terminal 17 (S208).

As a result, the company terminal 17 of the counter of the railroad company A displays a result based on the processing S208 on, for example, a screen (not shown in the figures) of the company terminal 17 (S209). Therefore, for example, when the user Y can receive a special service right (for example, provision of a drink), a person in charge of the counter of the railroad company A can provide an appropriate service or the like.

### Summary

The distributed processing system 10 in this embodiment is explained above. The information processing apparatuses 101a and 101b of the distributed processing system 10 specify a member ID based on a single ID common in the multiple systems. However, since what is shared by the multiple systems is the single ID, even if the single ID, for example, leaks, a risk that an individual is identified is low. Even if the information processing system 11b, for example, stops, at least a service concerning the information processing system 11a can be provided to the user. Therefore, in this embodiment, the user does not become unable to access all of the multiple systems. Therefore, it is possible to reduce management cost of the system by using the distributed processing system 10 in this embodiment.

In this embodiment, after the single ID is specified, a member ID is specified based on the member link information 401 specific to each of the information systems. That is, since the member ID is not shared by the multiple systems, a risk that an individual is, for example, identified can be reduced.

The right managing part 300 specifies information of a ticket (a right) of a member based on the member ID. Such processing related to individual information is processing specific to each of the multiple information systems and is not shared by the multiple information systems. Therefore, for example, compared with when a connection server is used, it is possible to reduce management cost of the system.

The individual-condition setting part 413 in this embodiment can set, for example, whether a ticket of a user can be used. Therefore, in this embodiment, a company can, for example, flexibly set a service to be provided to the user.

When the user, for example, owns multiple tickets, the individual-condition setting part 413 can set a priority degree of a service to be provided to the user. Therefore, even when the user owns the multiple tickets, the company or the like can present services to the user in appropriate order.

The common-condition setting part 415 can set a new service when the user receives services of multiple companies. Consequently, it is possible to provide a finer service to the user.

The right-access control part 410 in this embodiment transmits the medium ID to the specified information processing system based on the system selection information 402 (the processing S202 and S203). Therefore, irrespective of by what kind of a company terminal the medium ID is read, it is possible to cause a necessary information system to operate.

The embodiment explained above is for facilitating understanding of the present invention and is not for limitedly interpreting the present invention. The present invention can be changed and altered without departing from the gist of the present invention. It goes without saying that equivalents of the present invention are included in the present invention.

For example, the information processing system 11a includes the two information processing apparatuses 100a and 101a. However, for example, the information processing system 11a may include one information processing apparatus. In such a case, the functional blocks included in and the information stored in the information processing apparatuses 100a and 101a and stored information only have to be included in the one information processing apparatus.

### Reference Signs List

- 10: distributed processing system
- 11a, 11b: information processing system
- 12 to 14: user terminal
- 15 to 17: company terminal
- 200: central processing device
- 201: main storage device
- 202: internal bus
- 203: bus I/F
- 204: external bus
- 205: screen output device I/F
- 206: user input device I/F
- 207: large-capacity storage device I/F
- 208: communication device I/F
- 209: input and output device I/F
- 210: display
- 211: user input device
- 212: large-capacity storage device
- 213: communication device
- 214: input and output device
- 300: right managing part
- 301: right information
- 400: single ID information
- 401: member link information
- 402: system selection information
- 403: individual condition information
- 404: common condition information
- 410: right-access control part
- 411: synchronization operation part
- 412: system-selection determining part
- 413: individual-condition setting part
- 414: individual-condition determining part
- 415: common-condition setting part
- 416: common-condition determining part

## Claims

1. A distributed processing system (10) comprising a plurality of information processing systems (11a, 11b), **characterized in that**
each of the plurality of information processing systems (11a, 11b) includes:
a storing device (201) that stores first information (400) common to the plurality of information processing systems (11a, 11b), the first information (400) associating second identification information of a medium of a user with first identification information for identifying the user;
a specifying part (410) that specifies the first identification information based on the first information (400) and the second identification information acquired when information of the medium is read; and
a processing part (300) that executes processing specific to the each information processing system (11a, 11b) based on the first identification information specified by the specifying part (410).

2. The distributed processing system (10) according to claim 1, wherein the specifying part (410) specifies third identification information of the user based on the specified first identification information and second information (401) specific to the each information processing system (11a, 11b), the second information (401) associating the first identification information with the third identification information, the third identification information being information allocated to a customer who uses a service related to the each information processing system (11a, 11b).

3. The distributed processing system (10) according to claim 2, wherein the processing part (300) specifies, based on the third identification information, service information (301) stored in the storing device (201) of the each information processing system (11a, 11b) in association with the third identification information and indicating a content of a service to be provided to the user having the third identification information.

4. The distributed processing system (10) according to claim 3, wherein each of the plurality of information processing systems (11a, 11b) includes a first setting part (413) that sets, based on the first setting information, whether the service to be provided to the user having the third identification information is usable.

5. The distributed processing system (10) according to claim 4, wherein, when the service information (301) includes information indicating a plurality of services to be provided to the user having the third identification information, the first setting part (413) sets a priority degree of each kind of the information indicating the plurality of services based on second setting information (404) for setting the priority degree of each kind of the information indicating the plurality of services.

6. The distributed processing system (10) according to any one of claims 3 to 5, wherein each of the plurality of information processing systems (11a, 11b) includes a second setting part (415) that sets a new service to be provided to the user based on at least two kinds of the service information (301) selected from the service information (301) of the information processing system (11a, 11b).

7. The distributed processing system (10) according to any one of claims 1 to 6, wherein
the storing device (201) stores third information (402) common to the plurality of information processing systems (11a, 11b), the third information (402) associating the plurality of information processing systems (11a, 11b) with a plurality of terminals coupled to the distributed processing system (10), and
each of the plurality of information processing systems (11a, 11b) includes a transmitting part (410) that transmits, based on a reading terminal that reads the second identification information of the medium among the plurality of terminals and the third information (402), the second identification information to the information processing system (11a, 11b) associated with the reading terminal among the plurality of information processing systems (11a, 11b).

8. An information processing method to be executed by each of a plurality of information processing systems (11a, 11b) of a distributed processing system (10) including the plurality of information processing systems (11a, 11b), the method **characterized by** comprising:
specifying first identification information for identifying a user based on first information (400) common to the plurality of information processing systems (11a, 11b), the first information (400) associating second identification information of a medium of the user with the first identification information, and based on the second identification information acquired when information of the medium is read; and
executing processing specific to the each information processing system (11a, 11b) based on the specified first identification information.
